Europäisches Patentamt

European Patent Office

Office européen des brevets

(19)

(11) Veröffentlichungsnummer: **0 370 954**
**A2**

## (12) EUROPÄISCHE PATENTANMELDUNG

(21) Anmeldenummer: **89810873.3**

(22) Anmeldetag: **14.11.89**

(51) Int. Cl.5: **C08G 59/50, C08G 59/56, C09J 163/00**

Patentansprüche für folgenden Vertragsstaat: ES.

(30) Priorität: **23.11.88 US 275251**

(43) Veröffentlichungstag der Anmeldung:
**30.05.90 Patentblatt 90/22**

(84) Benannte Vertragsstaaten:
**DE ES FR GB IT NL SE**

(71) Anmelder: **CIBA-GEIGY AG**
**Klybeckstrasse 141**
**CH-4002 Basel(CH)**

(72) Erfinder: **Armbruster, Robert F.**
**6 Louis Place**
**Brewster, N.Y. 10509(US)**
Erfinder: **Eadara, Rajan**
**3925 Hazy Lane**
**Okemos Michigan 48864(US)**

(54) **Feuchthaftungs-Epoxidharz-Systeme.**

(57) Epoxidharz-Systeme enthaltend ein Epoxidharz und einen Härter in Kombination mit Mercapto-organosilanen weisen verbesserte Feuchthaftung und Verklebungsbeständigkeit auf.

EP 0 370 954 A2

## Feuchthaftungs-Epoxidharz-Systeme

Die vorliegende Erfindung betrifft Epoxidharz-Klebstoffzusammensetzungen enthaltend ein organisches Mercaptosilan, die daraus erhältlichen gehärteten Produkte, sowie die Verwendung dieser Zusammensetzungen zum Kleber mit verbesserter Feuchthaftung.

Epoxidharze werden in grossem Umfang als Klebstoffe zum Kleben und zur Reparatur von Betonoberflächen eingesetzt. Es hat sich jedoch gezeigt, dass die Haftfestigkeit und die Verklebungsbeständigkeit unter feuchten Bedingungen dürftig sind. Solche Bedingungen werden häufig bei schlechten Witterungsverhältnissen, wie z.B. Regen, Schnee oder Eis, oder während einer Anwendung in feuchter Umgebung angetroffen. Die nicht akzeptablen Klebeigenschaften spielen beim Verkleben von nassem oder feuchtem Beton, beim Kleben von altem auf neuen Beton, von Metall auf feuchten Beton oder ähnlichem eine Rolle.

Da die gegenwärtig eingesetzten Epoxidharzklebstoffe nicht die gewünschten Eigenschaften erfüllen, besteht ein Bedürfnis nach Epoxidharzklebstoffen, die auf allen Oberflächenstrukturen einfach anwendbar und unter allen Umweltbedingungen gute Eigenschaften aufweisen.

Aus den US-Patentschriften 4,291,144; 3,170,962; sowie 3,867,322 und 3,223,577 sind alkenyl- und epoxyterminierte Organosilane für Klebstoffsysteme bekannt.

Es wurde nun überraschend gefunden, dass durch die Zugabe von Organosilanen mit einer endständigen Mercaptogruppe in gewissen Konzentrationen in die Epoxidharzformulierung, verbesserte Haft- und Klebeigenschaften erhalten werden.

Dadurch wird eine Anwendung dieser verbesserten Klebstoff-Systeme unter verschiedensten Bedingungen möglich.

Diese Systeme sind besonders geeignet zum Einsatz unter feuchten Bedingungen, wenn die Haftbindung in feuchter Umgebung erfolgt.

Im Gegensatz zu Systemen ohne diesen Zusatz wird eine ausgezeichnete Haftfestigkeit und Verklebungsbeständigkeit erhalten.

Die vorliegende Erfindung betrifft eine Klebstoffzusammensetzung enthaltend

a) ein Epoxidharz mit im Durchschnitt mehr als einer Epoxygruppe pro Molekül,

b) einem Aminhärter für a) und

c) 0,5-10 Gew.-%, bezogen auf a) und b), eines Organosilanes enthaltend eine endständige Mercaptogruppe.

Die erfindungsgemässen Klebstoffzusammensetzungen ergeben eine verbesserte Verklebung von nassem Beton mit andern Betonzusammensetzungen, mit Metallen und dergleichen.

Die Epoxidharze, die erfindungsgemäss eingesetzt werden, umfassen alle Arten von Polyepoxiden, sofern diese im Durchschnitt mehr als eine Epoxygruppe pro Molekül aufweisen. Dabei kann es sich um ein gesättigtes, ungesättigtes, aliphatisches, alicyclisches, aromatisches oder heterocyclisches Epoxid handeln. Diese kann im weiteren durch eine nicht störende Gruppe wie z.B. ein Halogenatom, eine Hydroxygruppe, eine Ethoxygruppe, eine Estergruppe oder dergleichen substituiert sein.

Beispiele für solche Polyepoxide sind Epoxy-Novolakharze, Polyglycidylether von zweiwertigen Phenolen wie z.B. 2,2-Bis(4-hydroxyphenyl)propan (Bisphenol A); 1,1-Bis(4-hydroxyphenyl)ethan, Bis(4-hydroxyphenyl)methan, Bis(4-hydroxyphenyl)sulfon, Resorcin oder Hydrochinon; Polyglycidylether von dreiwertigen Alkoholen wie z.B. Glycerin; Polyglycidylester wie beispielsweise Diglycidylphthalat und Diglycidylisophthalat; cycloaliphatische Epoxidharze, epoxidierte Ester von polyethylenisch ungesättigten Fettsäuren wie z.B. epoxidiertes Leinöl; epoxidierte Ester von ungesättigten Alkoholen und ungesättigten Carbonsäuren wie z.B. 3,4-Epoxycyclohexylmethyl-3,4-epoxycyclohexylcarboxylat; sowie epoxidierte polyethylenisch ungesättigte Kohlenwasserstoffe.

Diglycidylether von zweiwertigen Phenolen sind bevorzugt. Speziell bevorzugt ist der Diglycidylether von 2,2-Bis(4-hydroxyphenyl)propan (Bisphenol A).

Zur erfindungsgemässen Anwendung geeignete Epoxidharze umfassen auch Epoxidharze, deren Viskosität durch Einsatz von Reaktivverdünnern, wie z.B. Glycidylethern, Glykolethern oder aromatischen Kohlenwasserstoffen erniedrigt wurde.

Als für in den erfindungsgemässen Systemen zum Einsatz geeignete Härter zu nennen sind aliphatische oder cycloaliphatische primäre oder sekundäre Amine einschliesslich deren Gemische. Typische Amine sind z.B. Ethylendiamin, Hexamethylendiamin, Trimethylhexamethylendiamin, Methylpentamethylendiamin, Diethylentriamin, Triethylentetramin, Tetraethylenpentamin, N,N-Dimethylpropylen-1,3-diamin,N,N-Diethylpropylen-1,3-diamin, Bis(4-amino-3-methyl-cyclohexyl)-methan, Bis(p-aminocyclohexyl)methan, 2,2-Bis(4-aminocyclohexyl)-propan, 3,5,5-Trimethyl-s-(aminomethyl)-cyclohexylamin, 1,2-Diaminocyclohexan, 1,4-Diaminocyclohexan, 1,3-Bis(aminomethyl)-cyclohexan, 1,4-Bis(aminomethyl)-cyclohexan, N-Aminoethylpiperazin, Isophorondiamin, p-Phenylendiamin, m-Phenylendiamin, Bis(4-aminophenyl)-methan, Bis(4-aminophenyl)ether, Bis(4-aminophenyl)keton, Anilin-Formaldehyd-Harze, Bis(4-aminophenyl)sulfon, Bis(3-aminophenyl)sulfon oder 2,4'-Diaminodiphenylsulfon.

Bevorzugte Härter sind 2,2,4-Trimethylhexamethylendiamin, 2,4,4-Trimethylhexamethylendiarnin, 2-Methylpentamethylendiamin, Diethylentriamin, Triethylentetramin, Tetraethylenpentamin, 1,2-Diaminocyclohexan, Bis(p-aminocyclohexyl)-methan, Isophorondiamin, 1,4-Bis(aminomethyl)-cyclohexan, N-Aminoethylpiperazin und 1,3-Bis(aminomethyl-cyclohexan.

Beispiele für die erfindungsgemässen Organosilane mit endständigen Mercaptogruppen sind gamma-Mercaptopropyltrimethoxysilan, beta-Mercaptoethyltrimethoxysilan, Mercaptomethyltrimethoxysilan, beta-Mercaptoethyltripropoxysilan, gamma-Mercaptopropyl-phenyl-dimethoxysilan oder beta-Mercaptoethyl-methyl-dimethoxysilan.

Bevorzugt ist gamma-Mercaptopropyltrimethoxysilan.

Die Silankomponente c) wird dem Harzsystem in Konzentrationen von 0,5-10 Gew.-%, bezogen auf das Harz a) und dem Härter b), bevorzugt in Konzentrationen von 0,5-5 Gew.-%, zugegeben. Konzentrationen, die deutlich ausserhalb dieser Konzentrationsbreite liegen, haben einen negativen Effekt auf die Hafteigenschaften, insbesondere auf die Haftfestigkeit und die Verklebungsbeständigkeit.

Die Silankomponente c) kann vor der Zusammengabe von Harz und Härter entweder mit dem Epoxidharz a) oder mit dem Härter b) bei Raumtemperatur gemischt werden. Das Mischen von c) mit dem Härter b) ist bevorzugt.

Die anschliessende Härtung der erfindungsgemässen Epoxidharz-Klebstoffzusammensetzung erfolgt nach an sich dem Klebstoff-Fachmann bekannter Weise. Allgemein wird die Härtung bei Temperaturen von 5-40°C in Gegenwart eines Härters während einer entsprechenden Zeitdauer durchgeführt. Der Härter c) wird in stöchiometrischem Verhältnis ±50 % bezogen auf das modifizierte Epoxidharz eingesetzt, wobei die Stöchiometrie von 1:1 bevorzugt ist.

Bei der Härtung bildet sich ein Netzwerk mit hoher Vernetzungsdichte. Der Ausdruck "Härtung" wie er hier verwendet wird, bedeutet die Ueberführung des vorstehend beschriebenen Epoxidharz-Systems in unlösliche und unschmelzbare vernetzte Produkte. Diese sind ebenfalls Gegenstand der vorliegenden Erfindung.

Den erfindungsgemässen Epoxidharz-Klebstoffzusammensetzungen können irgend in einem Stadium vor der Härtung weitere übliche Zusatzstoffe wie z.B. Streckmittel, Füllstoffe, Verstärkungsmittel, Pigmente, Farbstoffe, organische Lösungsmittel, Weichmacher, Mittel zur Erhöhung der Klebrigkeit, Kautschuke, Beschleuniger oder Verdünner zugesetzt werden.

Beispiele für solche Streckmittel, Verstärkungsmittel, Füllstoffe oder Pigmente, die in den erfindungsgemässen Klebstoffzusammensetzungen eingesetzt werden können, sind Steinkohlenteer, Asphalt, Glasfasern, Borfasern, Kohlefasern, Cellulose, Polyethylenpulver, Polypropylenpulver, Glimmer, Asbest, Quarzpulver, Gips, Antimontrioxid, Bentone, Lithopone, Baryt, Titandioxid, Russ oder Graphit.

Es können auch weitere übliche Additive wie z.B. Flammhemmer, Thixotropiermittel, Verlaufhilfsmittel wie beispielsweise Silikone, Celluloseacetat und -butyrat, Polyvinylbutyrat, Wachse, Stearate und dergleichen (welche zum Teil auch als Formentrennmittel dienen) zu den Klebstoffzusammensetzungen zugegeben werden.

Die erfindungsgemässen Epoxidharzzusammensetzungen sind wegen der verbesserten Feuchthaftung besonders gut auf dem Klebstoff- und Oberflächenschutz/-reparatur-Gebiet einsetzbar. Jedoch ist deren Verwendung auch in der Elektroindustrie, für Laminierprozesse und in der Bauindustrie möglich.

Sie können ebenfalls in Formulierungen wie z.B. für Formpressmassen, Giessharze, Werkzeugharze, Laminierharze, Dichtungs- und Füller-Zusammensetzungen und Bodenbeläge eingesetzt werden.

Die folgenden Beispiele erläutern die vorliegende Erfindung näher. In den Beispielen sind alle Angaben in Gewichtsteilen, sofern nichts anderes angegeben ist.

Beispiel 1:

100 Teile mit einem Reaktivverdünner versetzter Bisphenoldiglycidylether (Araldite® EP-IS von Ciba-Geigy Corp.) werden bei Raumtemperatur mit 35 Teilen 2,2,4-/2,4,4-Trimethylhexamethylendiamin, in das vorher 0,65 Gew.-%, bezogen auf Harz und Härter, gamma-Mercaptopropyltrimethoxysilan ebenfalls bei Raumtemperatur eingearbeitet wird, gemischt.

Dieses Gemisch wird als Klebstoffzusammensetzung eingesetzt.

Beispiele 2-4:

Analog zum vorgehend beschriebenen Verfahren werden die in Tabelle 1 angegebenen Mengen von gamma-Mercaptopropyltrimethoxysilan in die Klebstoffzusammensetzung eingearbeitet.

Beispiel 5: Ertmittlung der Haftfestigkeit

A. Feuchter Beton - Stahl:

Betonwürfel von 5 cm Kantenlänge werden 24 h bei Raumtemperatur in Wasser eingelegt, danach wird die Oberfläche abgewischt und eine 0,127 mm dicke Epoxidklebstoffschicht auf zwei entgegengesetzte Flächen aufgetragen und mit 5 x 5 cm Stahlstücken verklebt.

Die verklebten Proben werden bei Raumtemperatur während 7 Tagen gehärtet, wobei der Betonblock feucht gehalten wird.

Danach werden die Proben in einem Instron Zugfestigkeitsprüfgerät getestet, wobei die Stahlstücke mit einer Zugsgeschwindigkeit von 0,127 cm/min auseinandergezogen werden.

Es werden die notwendige Zugkraft zum Bruch sowie die Art des Bruchs d.h. Bruch im Beton oder in der Klebstoffschicht für jede Probe gemessen.

Die Resultate sind in der Tabelle 1 wiedergegeben.

B. Feuchter Beton - feuchter Beton:

Analog zu A. werden 5 cm Betonwürfel 24h im Wasser gelagert, abgewischt und miteinander durch eine 0,127 mm dicke Klebstoffschicht auf einer 13 cm$^2$ grossen Klebfläche verklebt.

Die Proben werden eine Woche bei Raumtemperatur gehärtet und danach mit Hammerschlägen aus 1 cm Distanz über der Verklebungslinie bis zum Bruch geprüft.

Die Bruchart wird bestimmt (Klebstoff- oder Betonbruch). Vorwiegender Betonbruch ist ein Indiz für effektive Verklebungsbeständigkeit. Die Resultate sind in Tabelle 1 wiedergegeben.

Tabelle 1

| Beispiel | Silankonz. [Gew.-%] bezogen auf Harz und Härter | Harz/Härter-Mischungsverhältnis | Verklebungsfestigkeit Methode | |
|---|---|---|---|---|
| | | | A [N/cm$^2$] [Bruch] | B [Bruch] |
| - | -- | 100:30 | 110,3 A | A |
| 1 | 0,65 | 100:35 | 399,9 C | C |
| 2 | 1,30 | 100:35 | 344,7 C | C |
| 3 | 2,60 | 100:35 | 320,6 C | C |
| 4 | 5,20 | 100:35 | 255,1 C | C |
| A: Bruch in Klebstoff C: Bruch im Beton | | | | |

**Ansprüche**

1. Klebstoffzusammensetzung enthaltend
    a) ein Epoxidharz mit im Durchschnitt mehr als einer Epoxygruppe pro Molekül,
    b) einem Aminhärter für a), und
    c) 0,5-10 Gew.-%, bezogen auf a) und b), eines Organosilans enthaltend eine endständige Mercaptogruppe.
2. Klebstoffzusammensetzung gemäss Anspruch 1, worin das Epoxidharz a) ein Epoxy-Novolakharz, einen Polyglycidylether eines zweiwertigen Phenols, einen Polyglycidylether eines dreiwertigen Alkohols ein cycloaliphatisches Epoxidharz, einen Polyglycidylester, einen epoxidierten Ester einer polyethylenisch ungesättigten Fettsäure, einen epoxidierten Ester eines ungesättigten Alkohols und einer ungesättigten Carbonsäure oder einen epoxidierten polyethylenisch ungesättigten Kohlenwasserstoff darstellt.

3. Klebstoffzusammensetzung gemäss Anspruch 1, worin das Epoxidharz a) durch einen Reaktionsverdünner modifiziert ist.

4. Klebstoffzusammensetzung gemäss Anspruch 2, worin das Epoxidharz a) einen Diglycidylether eines zweiwertigen Phenols bedeutet.

5. Klebstoffzusammensetzungen gemäss Anspruch 1, worin die Komponente c) gamma-Mercaptopropyltrimethoxysilan ist.

6. Klebstoffzusammensetzung gemäss Anspruch 1, die 0,5-5 Gew.-% der Komponente c) enthält.

7. Produkt erhältlich durch Härten der Klebstoffzusammensetzung nach Anspruch 1 bei einer Temperatur von 5-40°C.

8. Verwendung der Klebstoffzusammensetzung nach Anspruch 1 zur Verbesserung der Feuchthaftung.
Patentansprüche für folgenden Vertragsstaat :ES

1. Klebstoffzusammensetzung enthaltend
   a) ein Epoxidharz mit im Durchschnitt mehr als einer Epoxygruppe pro Molekül,
   b) einem Aminhärter für a), und
   c) 0,5-10 Gew.-%, bezogen auf a) und b), eines Organosilans enthaltend eine endständige Mercaptogruppe.

2. Klebstoffzusammensetzung gemäss Anspruch 1, worin das Epoxidharz a) ein Epoxy-Novolakharz, einen Polyglycidylether eines zweiwertigen Phenols, einen Polyglycidylether eines dreiwertigen Alkohols ein cycloaliphatisches Epoxidharz, einen Polyglycidylester, einen epoxidierten Ester einer polyethylenisch ungesättigten Fettsäure, einen epoxidierten Ester eines ungesättigten Alkohols und einer ungesättigten Carbonsäure oder einen epoxidierten polyethylenisch ungesättigten Kohlenwasserstoff darstellt.

3. Klebstoffzusammensetzung gemäss Anspruch 1, worin das Epoxidharz a) durch einen Reaktionsverdünner modifiziert ist.

4. Klebstoffzusammensetzung gemäss Anspruch 2, worin das Epoxidharz a) einen Diglycidylether eines zweiwertigen Phenols bedeutet.

5. Klebstoffzusammensetzungen gemäss Anspruch 1, worin die Komponente c) gamma-Mercaptopropyltrimethoxysilan ist.

6. Klebstoffzusammensetzung gemäss Anspruch 1, die 0,5-5 Gew.-% der Komponente c) enthält.

7. Verfahren zur Herstellung einer Klebstoffzusammensetzung enthaltend
   a) ein Epoxidharz mit im Durchschnitt mehr als einer Epoxygruppe pro Molekül,
   b) einem Aminhärter für a), und
   c) 0,5-10 Gew.-%, bezogen auf a) und b), eines Organosilans enthaltend eine endständige Mercaptogruppe durch Mischen der Komponenten a), b) und c) in an sich bekannter Weise.

8. Verfahren gemäss Anspruch 7, worin das Epoxidharz a) ein Epoxy-Novolakharz, einen Polyglycidylether eines zweiwertigen Phenols, einen Polyglycidylether eines dreiwertigen Alkohols ein cycloaliphatisches Epoxidharz, einen Polyglycidylester, einen epoxidierten Ester einer polyethylenisch ungesättigten Fettsäure, einen epoxidierten Ester eines ungesättigten Alkohols und einer ungesättigten Carbonsäure oder einen epoxidierten polyethylenisch ungesättigten Kohlenwasserstoff darstellt.

9. Verfahren gemäss Anspruch 7, worin das Epoxidharz a) durch einen Reaktionsverdünner modifiziert ist.

10. Verfahren gemäss Anspruch 8, worin das Epoxidharz a) einen Diglycidylether eines zweiwertigen Phenols bedeutet.

11. Verfahren gemäss Anspruch 7, worin die Komponente c) gamma-Mercaptopropyltrimethoxysilan ist.

12. Verfahren gemäss Anspruch 7, worin die Klebstoffzusammensetzung 0,5-5 Gew.-% der Komponente c) enthält.

13. Verfahren zum Härten in an sich bekannter Weise einer Klebstoffzusammensetzung enthaltend
   a) ein Epoxidharz mit im Durchschnitt mehr als einer Epoxygruppe pro Molekül
   b) einem Aminhärter für a), und
   c) 0,5-10 Gew.%, bezogen auf a) und b), eines Organosilans enthaltend eine enständige Mercaptogruppe.

14. Verwendung der Klebstoffzusammensetzung nach Anspruch 1 zur Verbesserung der Feuchthaftung.